# EUROPÄISCHE PATENTSCHRIFT

(11) **EP 1 352 110 B1**
(45) Veröffentlichungstag und Bekanntmachung des Hinweises auf die Patenterteilung: **26.05.2004**
(21) Anmeldenummer: 01907459.0
(22) Anmeldetag: 17.01.2001
(51) Int. Cl.: C25D 3/56, C25D 7/10, F16C 33/12

(54) **GALVANISCH ABGESCHIEDENE LAGERLEGIERUNG, GALVANISCHES BAD UND VERFAHREN ZUM GALVANISCHEN ABSCHEIDEN**
ELECTRODEPOSITED BEARING ALLOY, ELECTROPLATING BATH, AND ELECTRODEPOSITION METHOD
ALLIAGE POUR PALIERS DEPOSE PAR ELECTROLYSE, BAIN ELECTROLYTIQUE ET PROCEDE DE DEPOT PAR ELECTROLYSE

(43) Veröffentlichungstag der Anmeldung: 15.10.2003
(73) Patentinhaber: KS Gleitlager GmbH, 68789 St. Leon-Rot (DE)
(72) Erfinder: STEFFENS, Thomas, 74906 Bad Rappenau (DE); SCHUBERT, Werner, 69168 Wiesloch (DE); REHBOCK, Bernhard, 26871 Papenburg (DE)
(74) Vertreter: Friz, Oliver
(86) Internationale Anmeldenummer: PCT/EP2001/000492
(87) Internationale Veröffentlichungsnummer: WO 2002/057517

(56) Entgegenhaltungen:
- WO-A-01/36696
- GB-A- 1 600 951
- DATABASE CHEMABS [Online] CHEMICAL ABSTRACTS SERVICE, COLUMBUS, OHIO, US; IMAI, KIYOSHI: "Overlay on steel for sliding parts" retrieved from STN Database accession no. 107:26796 CA XP002177161 in der Anmeldung erwähnt & JP 61 221399 A (NDC CO., LTD., JAPAN) 1. Oktober 1986 (1986-10-01)
- PATENT ABSTRACTS OF JAPAN vol. 015, no. 475 (M-1186), 3. Dezember 1991 (1991-12-03) & JP 03 204194 A (TANAKA DENSHI KOGYO KK), 5. September 1991 (1991-09-05)
- PATENT ABSTRACTS OF JAPAN vol. 015, no. 056 (C-0804), 8. Februar 1991 (1991-02-08) & JP 02 285041 A (FURUKAWA ELECTRIC CO LTD:THE), 22. November 1990 (1990-11-22)

## Beschreibung

Die Erfindung betrifft eine galvanisch abgeschiedene Lagerlegierung auf Blei-Zinn-Kupfer-Basis zur Herstellung von Gleitschichten für Gleitlager.

Eine galvanisch abgeschiedene Lagerlegierung ist beispielsweise aus DE 27 47 545 C2 bekannt, die die Verwendung einer binären bzw. ternären Legierung aus 20% bis 70% Kupfer, 15% bis 80% Blei, 0% bis 30% Zinn und 0% bis 1% Antimon, Indium und/oder Cadmium für Gleitschichten offenbart, wobei die Gleitschicht durch elektrochemisches Abscheiden der Legierung gebildet werden soll. Es wurde festgestellt, daß durch galvanisches Abscheiden der Legierungsbestandteile bei einer Blei-Zinn-Kupfer-Legierung mit hohem Kupfergehalt die Eigenschaften Ermüdungsfestigkeit, Korrosionsfestigkeit und Verschleißfestigkeit verbessert werden können.

Jedoch führt die Erhöhung des Kupfergehaltes im galvanischen Bad über 6 Gew.-% Kupfer zu Problemen. Bei diesen hohen Kupfergehalten tritt "Kupferzementation" (selbständiges stromloses Abscheiden von Kupfer) auf.

Weiterhin ist aus der DE 27 22 144 A1 bereits eine Weißmetall-Lagerlegierung auf Blei-Zinn-Kupfer-Basis, insbesondere zur Herstellung von Gleitschichten für Mehrschichtgleitlager, bekannt, bei der die bleihaltige ternäre Legierung folgende gewichtsprozentuale Zusammensetzung aufweist: 10% bis 20% Zinn, 6% bis 10% Kupfer, insbesondere 14% Zinn, 8% Kupfer, Rest Blei. Auch diese Legierung muß aus galvanischen Bädern mit hohem Kupfergehalt abgeschieden werden, so daß sich dieselben Probleme ergeben.

Aus beiden genannten Schriften war es bereits bekannt, unter Beibehaltung des hohen Kupfergehalts der Legierung Antimon zuzusetzen, um die Lebensdauer zu erhöhen.

Aus der japanischen Offenlegungsschrift JP 61-1221399 ist eine galvanisch abgeschiedene Gleitlagerlegierung mit 66 - 84 Gew.-% Blei, 15 - 30 Gew.-% Zinn und mit 1 - 4 Gew.-% Kupfer bekannt. In der Druckschrift ist ferner erwähnt, dass die Legierung noch 0,1 - 5 Gew.-% Antimon aufweisen kann, um die Ermüdungsfestigkeit zu verbessern. Über die Einbringung des Antimon ist nichts erwähnt. Die angegebene Zusammensetzung des galvanischen Bads enthält kein Antimon.

Es ist die Aufgabe der vorliegenden Erfindung, eine galvanisch abgeschiedene Lagerlegierung der gattungsgemäßen Art zu schaffen, die eine hohe Härte und Belastbarkeit aufweist und sich reproduzierbar herstellen läßt, ohne dass die eingangs erwähnten Probleme bei hohen Kupfergehalten auftreten. Ferner soll ein galvanisches Bad angegeben werden, das sich zum Herstellen von Blei-Zinn-Kupfer-Basislegierungen eignet, und ein Verfahren zum galvanischen Abscheiden einer solchen Blei-Zinn-Kupfer-Basislegierung.

Diese Aufgabe wird erfindungsgemäß gelöst durch eine Lagerlegierung auf Blei-Zinn-Kupfer-Basis, die als Hauptbestandteil Blei und 3 bis 10 Gew.-% Zinn, 2 bis 5,5 Gew.-% Kupfer und 0,5 bis 3,0 Gew.-% Antimon enthält und eine Vickers-Härte von wenigstens 32 HV 0,002 aufweist. Die Vickers-Härte wird als Mikrohärte gemäß DIN 6507-1 vom Januar 1998 bestimmt.

Es wurde erfindungsgemäß festgestellt, dass die Zugabe von geringen Mengen von Antimon in das galvanische Bad, aus dem die Lagerlegierung abgeschieden wird, das Abscheideverhalten von Kupfer, aber auch Antimon selbst, dahingehend positiv beeinflusst, dass der Kupfergehalt und der Antimongehalt (in Gew.-%) in der abgeschiedenen Lagerlegierung höher sind als die jeweiligen Gehalte in dem galvanischen Bad. Ferner führt aber die Abscheidung von Kupfer in Anwesenheit von Antimon zu einer Erhöhung der Härte der Lagerlegierung, und zwar auch bei verhältnismäßig geringen Kupfergehalten unterhalb von 6 Gew.-%. Dies bringt den weiteren Vorteil mit sich, dass die Legierung aus galvanischen Bädern mit verhältnismäßig geringem Kupfergehalt abgeschieden werden kann. Überraschenderweise lassen sich Vickers-Härten von wenigstens 32 HV 0,002 bei der erfindungsgemäßen galvanisch abgeschiedenen Lagerlegierung erreichen.

Es wurde ferner festgestellt, dass überraschenderweise geringere Zinngehalte von 3 bis 10 Gew.-%, insbesondere 3 bis 8 Gew.-% zu hervorragenden tribologischen Eigenschaften der abgeschiedenen Lagerlegierung unter Beibehaltung der hohen Härte führen.

Die galvanisch abgeschiedene Lagerlegierung enthält vorzugsweise 3 bis 5,5 Gew.-% Kupfer. Ihr Antimongehalt beträgt in weiterer Ausbildung der Erfindung 1 bis 2,5 Gew.-%, insbesondere 1 bis 2 Gew.-%.

Bei bevorzugten Zusammensetzungen lassen sich Vickers-Härten von wenigstens 35 HV 0,002 erreichen.

Gegenstand der Erfindung ist desweiteren ein galvanisches Bad mit den Merkmalen der Ansprüche 7-12, das zur Herstellung von Lagerlegierungen auf Blei-Zinn-Kupfer-Basis geeignet ist.

Desweiteren betrifft die Erfindung ein Verfahren zum galvanischen Abscheiden einer Blei-Zinn-Kupfer-Legierung auf einer Lagerschale aus einem galvanischen Bad mit den Merkmalen des Anspruchs 13. Bevorzugte Ausführungsformen ergeben sich aus den weiteren Unteransprüchen.

Es wurde erfindungsgemäß erkannt, dass der Zusatz von Antimon in ein galvanisches Bad zu einer positiven Beeinflussung des Abscheideverhaltens von Kupfer führt, indem Kupfer bevorzugt aber gleichwohl gleichmäßig abgeschieden wird, so dass der Gehalt oder die Konzentration des abgeschiedenen Kupfers in der Lagerlegierung höher ist als in dem galvanischen Bad. Es wurde desweiteren festgestellt, dass dies auch für das Antimon selbst zutrifft und auch für Blei. Hingegen wird Zinn in geringerem Maße abgeschieden.

Dies erweist sich in verfahrenstechnischer Hinsicht als besonders vorteilhaft, als mit einer verhältnismäßig geringen Kupferkonzentration in dem galvanischem Bad eine demgegenüber höhere Kupferkonzentration in der Lagerlegierung erreicht werden kann, so dass das Problem der Kupferzementation, welches bei hohen Kupferkonzentrationen im galvanischen Bad auftritt, umgangen werden kann. Zudem führte die Zugabe von Antimon in das galvanische Bad zu einer erheblichen Härtesteigerung bei der hieraus abgeschiedenen Lagerlegierung. Die Lagerlegierung kann kontrolliert und reproduzierbar hergestellt werden. Nachfolgend soll die Erfindung anhand erfindungsgemäßer Zusammensetzungen galvanischer Bäder und hieraus abgeschiedener Gleitlagerlegierungen und anhand von bekannten Bad-Zusammensetzungen und Legierungen erörtert werden. Es wird auf die nachstehende Tabelle Bezug genommen.

| | PbSn10Cu2 1 | PbSn10Cu6 2 | erfind. Gleitsch.3 | erfind. Gleitsch.4 |
|---|---|---|---|---|
| Zus.setz. | Bad 1 | Bad 2 | Bad 3 | Bad 4 |
| Pb | 87,4 | 84,9 | 69,7 | 82,5 |
| Sn | 10,4 | 10,6 | 26,9 | 14,6 |
| Cu | 2,2 | 5,5 | 2,3 | 2,1 |
| Sb | - | - | 1,0 | 0,85 |
| | | | | |

| Zus.setz. | Schicht 1 | Schicht 2 | Schicht 3 | Schicht 4 |
|---|---|---|---|---|
| Pb | 87,2 | 84,4 | 90,1 | 87,5 |
| Sn | 10,5 | 10,2 | 4,2 | 5,5 |
| Cu | 2,3 | 5,4 | 3,7 | 5,4 |
| Sb | - | - | 1,9 | 1,4 |
| | | | | |
| Härte HV 0,002 | 16 HV | 27 HV | 41 HV | 35-40 HV |

Die beiden ersten Spalten zeigen die Zusammensetzung genormter galvanischer Bäder 1 und 2 und hieraus mit im wesentlichen identischer Zusammensetzung abgeschiedener Gleitschichten 1 und 2 in Form der PbSn10Cu2 und der PbSn10Cu6-Legierung. Diese Legierungen unterscheiden sich voneinander im wesentlichen durch einen verhältnismäßig geringen Kupfergehalt bei Schicht 1 von etwas mehr als 2 Gew.-% und einen demgegenüber höheren Kupfergehalt bei Schicht 2 von ca. 5,5 Gew.-%.

Diese Gleitlagerschichten werden aus einem galvanischen Bad im Wesentlichen derselben Konzentration der Bestandteile wie in der abgeschiedenen Legierung hergestellt. Die erste der genannten Gleitschichten PbSn10Cu2 gemäß ISO 4383 weist eine Vickers-Härte (Mikrohärte) von 16 HV 0,002 auf. Die Vickers-Härte wird dabei gemäß DIN ISO 6507-1 vom Januar 1998 in bekannter Weise durch Eindrücken einer Spitze einer genormten Pyramide mit einer Kraft, die von einer aufgelegten Masse von 2 g erzeugt wurde (0,0196 N), ermittelt. Die Prüfkraft ist deshalb so gering gewählt, dass die Diamantspitze die abgeschiedene Gleitschicht nicht bis zum Trägermaterial durchdringt. Durch die Erhöhung des Kupfergehalts mit der zweiten vielfach verwendeten Legierung PbSn10Cu6 kann die Härte in bekannter Weise auf etwa 27 HV 0,002 gesteigert werden. Eine hieraus hergestellte Gleitschicht weist eine höhere Belastbarkeit auf.

Die beiden rechten Spalten zeigen erfindungsgemäße Ausführungsbeispiele der Zusammensetzung des galvanischen Bads und der hieraus jeweils abgeschiedenen Lagerlegierung bzw. Schichten 3 und 4. Man erkennt, dass die Bestandteile Kupfer und Antimon in der galvanisch abgeschiedenen Lagerlegierung mit einem höheren Anteil bzw..höherer Konzentration vorliegen als in dem galvanischen Bad. Gleiches gilt für die Legierungskomponente Blei. Hingegen wird Zinn in viel geringerem Maße abgeschieden. Wie ein Vergleich der erfindungsgemäßen Ausführungsbeispiele 3 und 4 zeigt, führt eine Reduzierung des Zinngehalts des galvanischen Bades von 26,9 auf 14,6 Gew.-% nicht zu einem geringeren Zinngehalt der abgeschiedenen Legierung, sondern im Gegenteil zu einem höheren Zinngehalt, was auf die komplexen Zusammenhänge zwischen den weiteren Komponenten zurückzuführen ist. Diese Erhöhung des Zinngehalts bei Schicht 4 gegenüber Schicht 3 ist auf den geringeren Antimongehalt von nur 0,85 gegenüber 1,0 zurückzuführen. Antimon hemmt die Abscheidung von Zinn. Es begünstigt hingegen die Abscheidung von Blei und Kupfer. Die bei Schicht 3 gemessene Vickers-Härte (Mikrohärte) beträgt 41 HV 0,002 und bei Schicht 4 wurden bei 5 verschiedenen Proben Mikrohärten von 35 bis 40 HV 0,002 gemessen.

## Patentansprüche

1. Galvanisch abgeschiedene Lagerlegierung auf Blei-Zinn-Kupfer-Basis zur Herstellung von Gleitschichten für Gleitlager, **dadurch gekennzeichnet, daß** die Legierung als Hauptbestandteil Blei und 3 bis 10 Gew.-% Zinn, 2 bis 5,5 Gew.-% Kupfer und 0,5 bis 3,0 Gew.-% Antimon enthält und eine Vickers-Härte von wenigstens 32 HV 0,002 aufweist.

2. Lagerlegierung nach Anspruch 1, **dadurch gekennzeichnet, daß** die Legierung 3 bis 8 Gew.-% Zinn enthält.

3. Lagerlegierung nach Anspruch 1 oder 2, **dadurch gekennzeichnet, daß** die Legierung 3 bis 5,5 Gew.-% Kupfer enthält.

4. Lagerlegierung nach einem der vorstehenden Ansprüche, **dadurch gekennzeichnet, daß** die Legierung 1 bis 2,5 Gew.-% Antimon enthält.

5. Lagerlegierung nach Anspruch 4, **dadurch gekennzeichnet, daß** die Legierung 1 bis 2 Gew.-% Antimon enthält.

6. Lagerlegierung nach einem der vorstehenden Ansprüche, **dadurch gekennzeichnet, daß** die Legierung eine Vickers-Härte von wenigstens 35 HV 0,002 aufweist.

7. Galvanisches Bad umfassend Blei, Zinn, Kupfer, zum Abscheiden einer Lagerlegierung auf Blei-Zinn-Kupfer-Basis mit Blei als Hauptbestandteil, **dadurch gekennzeichnet, daß** das galvanische Bad 60 bis 90 Gew.-% Blei, 5 bis 30 Gew.-% Zinn, 1 bis 4 Gew.-% Kupfer und 0,5 bis 2 Gew.-% Antimon enthält.

8. Galvanisches Bad nach Anspruch 7, **dadurch gekennzeichnet, daß** das galvanische Bad 10 bis 30 Gew.-% Zinn, 1 bis 3 Gew.-% Kupfer und 0,5 bis 1,5 Gew.-% Antimon enthält.

9. Galvanisches Bad nach Anspruch 7 oder 8, **dadurch gekennzeichnet, daß** das galvanische Bad 1,5 bis 2,5 Gew.-% Kupfer enthält.

10. Galvanisches Bad nach Anspruch 9, **dadurch gekennzeichnet, daß** das galvanische Bad 2 bis 2,5 Gew.-% Kupfer enthält.

11. Galvanisches Bad nach einem der Ansprüche 7-10, **dadurch gekennzeichnet, daß** das galvanische Bad 0,7 bis 1,5 Gew.-% Antimon enthält.

12. Galvanisches Bad nach Anspruch 11, **dadurch gekennzeichnet, daß** das galvanische Bad 0,7 bis 1,2 Gew.-% Antimon enthält.

13. Verfahren zum galvanischen Abscheiden einer Blei-Zinn-Kupfer-Legierung auf einer Lagerschale aus einem galvanischen Bad nach einem der Ansprüche 7 bis 12, **dadurch gekennzeichnet, daß** der Blei-, Zinn-, Kupfer- und Antimongehalt des galvanischen Bads mit 60 bis 90 Gew.-% Blei, 5 bis 30 Gew.-% Zinn, 1 bis 4 Gew.-% Kupfer und 0,5 bis 2 Gew.-% Antimon gewählt wird, und dass daraus die Lagerlegierung mit einem höheren Kupfergehalt und einem höheren Antimongehalt als der des galvanischen Bads abgeschieden wird.

14. Verfahren nach Anspruch 13, **dadurch gekennzeichnet, dass** die Lagerlegierung mit Blei als Hauptbestandteil und einem Zinngehalt von 3 bis 10 Gew.%, einem Kupfergehalt von 2 bis 5,5 Gew.-% und einem Antimongehalt von 0,5 bis 3,0 Gew.-% abgeschieden wird und eine Vickers-Härte von wenigstens 32 HV 0,002 aufweist.

15. Verfahren nach Anspruch 13 oder 14, **dadurch gekennzeichnet, dass** der Kupfergehalt des verwendeten galvanischen Bads weniger als 2,8 Gew.-% gewählt wird und die Lagerlegierung mit einem Kupfergehalt von mehr als 3,2 vorzugsweise mit mehr als 3,5 Gew.-% abgeschieden wird.

## Claims

1. Electrodeposited bearing alloy based on lead, tin and copper for producing sliding layers for plane bearings, **characterised in that** the alloy contains, as its main component, lead and 3 to 10% by weight tin, 2 to 5.5% by weight copper and 0.5 to 3.0% by weight antimony and has a pyramid hardness of at least 32 HV 0.002.

2. Bearing alloy according to claim 1, **characterised in that** the alloy contains 3 to 8% by weight tin.

3. Bearing alloy according to claim 1 or 2, **characterised in that** the alloy contains 3 to 5.5% by weight copper.

4. Bearing alloy according to any of the preceding claims, **characterised in that** the alloy contains 1 to 2.5% by weight antimony.

5. Bearing alloy according to claim 4, **characterised in that** the alloy contains 1 to 2% by weight antimony.

6. Bearing alloy according to any of the preceding claims, **characterised in that** the alloy has a pyramid hardness of at least 35 HV 0.002.

7. Electroplating bath comprising lead, tin and copper for depositing a bearing alloy based on lead, tin and copper with lead as the main component, **characterised in that** the electroplating bath contains 60 to 90% by weight lead, 5 to 30% by weight tin, 1 to 4% by weight copper and 0.5 to 2% by weight antimony.

8. Electroplating bath according to claim 7, **characterised in that** the electroplating bath contains 10 to 30% by weight tin, 1 to 3% by weight copper and 0.1 to 1.5% by weight antimony.

9. Electroplating bath according to claim 7 or 8, **characterised in that** the electroplating bath contains 1.5 to 2.5% by weight copper.

10. Electroplating bath according to claim 9, **characterised in that** the electroplating bath contains 2 to 2.5% by weight copper.

11. Electroplating bath according to any of claims 7 to 10, **characterised in that** the electroplating bath contains 0.7 to 1.5% by weight antimony.

12. Electroplating bath according to claim 11, **characterised in that** the electroplating bath contains 0.7 to 1.2% by weight antimony.

13. Method for electrodepositing a lead-tin-copper alloy on a bearing shell from an electroplating bath according to any of claims 7 to 12, **characterised in that** the lead, tin, copper and antimony content of the electroplating bath is selected at 60 to 90% by weight lead, 5 to 30% by weight tin, 1 to 4% by weight copper and 0.5 to 2% by weight antimony, and **in that** the bearing alloy with a higher copper content and a higher antimony content than that of the electroplating bath is deposited therefrom.

14. Method according to claim 13, **characterised in that** the bearing alloy with lead as its main component and a tin content of 3 to 10% by weight, a copper content of 2 to 5.5% by weight and an antimony content of 0.5 to 3.0% by weight is deposited and has a pyramid hardness of at least 32 HV 0.002.

15. Method according to claim 13 or 14, **characterised in that** the copper content of the electroplating bath used is selected so as to be less than 2.8% by weight and the bearing alloy is deposited with a copper content of more than 3.2, preferably with a copper content of more than 3.5% by weight.

## Revendications

1. Alliage pour paliers déposé par électrolyse, à base de plomb-étain-cuivre pour fabriquer des couches de glissement de paliers lisses, **caractérisé en ce que** l'alliage contient du plomb comme composant principal ainsi que 3 à 10% en poids d'étain, 2 à 5,5 % en poids de cuivre et 0,5 à 3,0 % en poids d'antimoine, et **en ce qu'**il présente une dureté Vickers d'au moins 32 HV 0,002.

2. Alliage pour paliers selon la revendication 1, **caractérisé en ce qu'**il contient 3 à 8 % en poids d'étain.

3. Alliage pour paliers selon la revendication 1 ou la revendication 2, **caractérisé en ce qu'**il contient 3 à 5,5 % en poids de cuivre.

4. Alliage pour paliers selon l'une quelconque des revendications précédentes, **caractérisé en ce qu'**il contient 1 à 2,5 % en poids d'antimoine.

5. Alliage pour paliers selon la revendication 4, **caractérisé en ce qu'**il contient 1 à 2 % en poids d'antimoine.

6. Alliage pour paliers selon l'une quelconque des revendications précédentes, **caractérisé en ce qu'**il présente une dureté Vickers d'au moins 35 HV 0,002.

7. Bain électrolytique contenant du plomb, de l'étain, du cuivre pour le dépôt par électrolyse d'un alliage pour paliers à base de plomb-étain-cuivre ayant le plomb pour composant principal, **caractérisé en ce que** le bain électrolytique contient 60 à 90 % en poids de plomb, 5 à 30 % en poids d'étain, 1 à 4 % en poids de cuivre et 0,5 à 2 % en poids d'antimoine.

8. Bain électrolytique selon la revendication 7, **caractérisé en ce qu'**il contient 10 à 30 % en poids d'étain, 1 à 3 % en poids de cuivre et 0,5 à 1,5 % en poids d'antimoine.

9. Bain électrolytique selon la revendication 7 ou la revendication 8, **caractérisé en ce que** le bain électrolytique contient 1,5 à 2,5 % en poids de cuivre.

10. Bain électrolytique selon la revendication 9, **caractérisé en ce qu'**il contient 2 à 2,5 % en poids de cuivre.

11. Bain électrolytique selon l'une quelconque des revendications 7 à 10, **caractérisé** en qu'il contient 0,7 à 1,5 % en poids d'antimoine.

12. Bain électrolytique selon la revendication 11, **caractérisé** en qu'il contient 0,7 à 1,2 % en poids d'antimoine.

13. Procédé de dépôt par électrolyse d'un alliage plomb-étain-cuivre sur une coquille de coussinet à partir d'un bain électrolytique selon l'une des revendications 7 à 12, **caractérisé en ce que** les teneurs du bain électrolytique en plomb, étain, cuivre et antimoine sont choisies entre 60 et 90 % en poids pour le plomb, entre 5 et 30 % en poids pour l'étain, entre 1 et 4 % en poids pour le cuivre et entre 0,5 et 2 % en poids pour l'antimoine, et **en ce que** l'alliage pour paliers déposé à partir de ce bain présente des teneurs en cuivre et en antimoine supérieures à celles du bain électrolytique.

14. Procédé selon la revendication 13, **caractérisé en ce que** l'alliage pour paliers déposé par électrolyse a le plomb pour composant principal et présente une teneur en étain de 3 à 10 % en étain, une teneur en cuivre de 2 à 5,5 % en poids et une teneur en antimoine de 0,5 à 3,0 % en poids, et **en ce qu'**il présente une dureté Vickers d'au moins 32 HV 0,002.

15. Procédé selon la revendication 13 ou la revendication 14, **caractérisé en ce que** la teneur en cuivre du bain électrolytique employé est choisie inférieure à 2,8 % en poids et **en ce que** l'alliage pour paliers déposé présente une teneur en cuivre supérieure à 3,2 %, et de préférence supérieure à 3,5 % en poids.
